Europäisches Patentamt

European Patent Office

Office européen des brevets

(11) Publication number: **0 501 534 A1**

## EUROPEAN PATENT APPLICATION

(21) Application number: **92200091.4**

(22) Date of filing: **14.01.92**

(51) Int. Cl.5: **F16D 65/097**

(30) Priority: **02.02.91 GB 9102308**

(43) Date of publication of application:
**02.09.92 Bulletin 92/36**

(84) Designated Contracting States:
**AT BE CH DE DK ES FR GR IT LI LU NL PT SE**

(71) Applicant: **GENERAL MOTORS FRANCE**
**56 à 68 Avenue Louis Roche**
**F-92231 Gennevilliers Paris(FR)**

(72) Inventor: **Caille, Daniel**
**Le haut de la ruelle de Creil**
**F-60530 Ercuis(FR)**
Inventor: **Mazon, Yves**
**23 rue Pouchet**
**F-75017 Paris(FR)**

(74) Representative: **Denton, Michael John et al**
**Patent Section 1st Floor Gideon House 28**
**Chapel Street**
**Luton Bedfordshire LU1 2SE(GB)**

(54) **Anti-rattle spring for a disc brake.**

(57) An anti-rattle spring (34) for a disc brake being formed in one piece from sheet metal and comprising a bridge section (36) resiliently engageable in an aperture in the bridge portion of the caliper of the disc brake, the bridge section comprising two arms (42,44) which extend in a longitudinal direction substantially parallel to one another, which are spaced apart in the lateral direction to define a longitudinally extending slot (46) therebetween, and which are bent into a substantially M shape; a first leg (38) extending between one end (48) of the arms to close the slot at that end; and a second leg (40) extending between the other end (50) of the arms to close the other end of the slot, the second leg having a first portion (56) extending a predetermined length in the lateral direction for engaging the backing plate of one of the brake pads of the disc brake for exerting a force thereon having both a tangential and a radial component with respect to the disc brake.

Fig.3.

This invention relates to an anti-rattle spring for a disc brake, and, in particular, to such a spring which resiliently holds a brake pad in place to thereby reduce noise and vibration.

This invention has particular application in a disc brake comprising a rotor, inner and outer brake pads each comprising friction lining material on a backing plate, and a caliper comprising inner and outer leg portions positioned outwardly of the inner and outer brake pads respectively and an integral bridge portion extending across a portion of the periphery of the rotor, at least one of the leg portions having a piston slidably mounted therein and movable under the action of fluid pressure to move the brake pads in a lateral direction into frictional engagement with the rotor.

Numerous designs of anti-rattle springs for such disc brakes are known, examples being shown in European patent application publication no. 0,294,286A. In this publication, the anti-rattle springs have a bridge section which fits in an aperture in the bridge portion of the caliper and which is substantially flat and solid. Such an arrangement is not conducive to retaining the spring in the aperture, especially when the brake pads are being replaced, and also interferes with the flow of air through the disc brake, thereby restricting ventilation thereof.

It is an object of the present invention to overcome the above mentioned disadvantages.

An anti-rattle spring in accordance with the present invention for a disc brake as described above is formed in one piece from sheet metal and comprises a bridge section resiliently engageable in an aperture in the bridge portion of the caliper, the bridge section comprising two arms which extend in a longitudinal direction substantially perpendicular to the lateral direction and substantially parallel to one another, which are spaced apart in the lateral direction to define a longitudinally extending slot therebetween, and which are bent into a substantially M shape; a first leg extending between one end of the arms to close the slot at that end; and a second leg extending between the other end of the arms to close the other end of the slot, the second leg having a first portion extending a predetermined length in the lateral direction for engaging the backing plate of one of the brake pads for exerting a force thereon having both a tangential and a radial component with respect to the disc brake.

This arrangement overcomes the disadvantages mentioned above in that the shape and configuration of the bridge section ensures the anti-rattle spring is securley held in the aperture, and the slot ensures ventilation of the disc brake is not impaired.

Preferably, the first portion comprises two sections extending in opposite directions to one another, each section having the same predetermined length. This arrangement is such that identical anti-rattle springs can be used for each brake pad of the disc brake, and for disc brakes on opposite sides of a motor vehicle.

Alternatively, the first portion may be on one side of the bridge section, and the second leg may have a second portion extending in the opposite direction to the first portion, whereby the anti-rattle spring can engage the backing plates of both brake pads of a disc brake substantially simultaneously.

Preferably, the second leg is bent into a substantially U-shape, one edge of the U being attached to the bridge section, and the other,free, edge of the U being directed towards the first leg. In this case, the second leg may have an extension bent to protrude between the arms and through the slot on the bridge section. The extension provides a means by which the first portion may be lifted off the backing plate to allow easy removal and replacement of a brake pad.

Alternatively, the second leg may be substantially flat and extend away from the bridge section.

Preferably, the first leg is substantially flat and extends away from the bridge section.

The arms of the bridge section may be of unequal length to allow the anti-rattle spring to be retained in an aperture which is not symmetrical.

The present invention also includes a disc brake having an anti-rattle spring as herein described.

For the sake of clarity in the specification and claims of the present application, by lateral direction is meant a direction substantially parallel to the axis of rotation of the rotor of the disc brake; by longitudinal direction is meant a direction substantially perpendicular to the lateral direction; by radial direction is meant a direction substantially towards and away from the axis of rotation of the rotor; and by tangential direction is meant a direction substantially perpendicular to the radial direction.

The present invention will now be described, by way of example, with reference to the accompanying drawings, in which:-

Figure 1 is an end view of an anti-rattle spring in accordance with a first embodiment of the present invention taken in the direction of arrow I in Figure 2;

Figure 2 is a side view of the anti-rattle spring of Figure 1 taken in the direction of arrow II in Figure 1;

Figure 3 is a perspective view of the anti-rattle spring of Figure 1;

Figure 4 is an end view of an anti-rattle spring in accordance with a second embodiment of the present invention taken in the direction of arrow IV in Figure 5;

Figure 5 is a side view of the anti-rattle spring of Figure 4 taken in the direction of arrow V in Figure 4;

Figure 6 is a perspective view of the anti-rattle spring of Figure 4;

Figure 7 is an end view of an anti-rattle spring in accordance with a third embodiment of the present invention taken in the direction of arrow VII in Figure 8;

Figure 8 is a side view of the anti-rattle spring of Figure 7 taken in the direction of arrow VIII in Figure 7;

Figure 9 is a perspective view of the anti-rattle spring of Figure 7;

Figure 10 is a side view of the anti-rattle spring of Figure 1 when positioned in an aperture in the bridge portion of the caliper of a disc brake, with the brake pad omitted;

Figure 11 is a similar view to that of Figure 10, but with the brake pad included;

Figure 12 is a similar view to that of Figure 11, but with the anti-rattle spring of Figure 7;

Figure 13 is a perspective view of a fourth embodiment of anti-rattle spring in accordance with the invention;

Figure 14 is a side view of a disc brake including the anti-rattle spring of Figure 1, with the area around the anti-rattle springs in cross-section;

Figure 15 is a cross-sectional view on the line XV-XV of Figure 14; and

Figure 16 is an end view of a fifth embodiment of anti-rattle spring in accordance with the present invention.

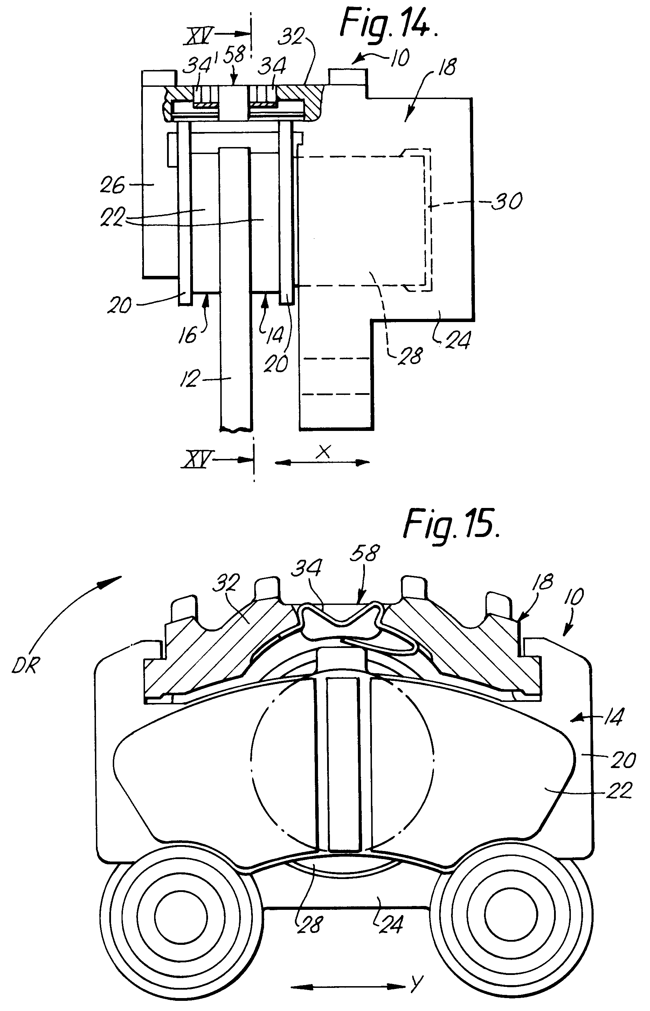

Referring to Figures 14 and 15, a disc brake 10 is shown comprising a rotor 12, inner and outer brake pads 14,16 respectively, and a caliper 18. The rotor 12 rotates about its axis (not shown) in the direction indicated by arrow DR. The brake pads 14,16 each comprise a backing plate 20 and friction lining material 22. The caliper 18 comprises inner and outer leg portions 24,26 respectively positioned outwardly of the inner and outer brake pads 14,16 respectively. A piston 28 is slidably positioned in a cylinder 30 in the inner leg portion 24. A bridge portion 32, which is integral with the leg portions 24,26 extends in a lateral direction X, parallel to the rotation axis of the rotor 12, across a portion of the outer periphery of the rotor. Anti-rattle springs 34,34' (described in greater detail below) are positioned in an aperture 58 in the bridge portion 32 of the caliper 18. The disc brake 10 is slidably mounted on a bracket (not shown). The disc brake 10 is operated under the influence of fluid pressure in the cylinder 30. Increasing fluid pressure causes the piston 28 to slidably move to press the inner brake pad 14 into frictional engagement with the rotor 12, and by reactive force, to move the outer leg portion 26 to press the outer brake pad 16 into frictional engagement with the rotor. The brake pads 14,16 are therefore moved in the lateral direction X into frictional engagement with the rotor 12 on actuaction of the disc brake 10. This arrangement of disc brake, and its operation, is well known to those skilled in the art, and will not (with exception to the anti-rattle spring) be described in greater detail.

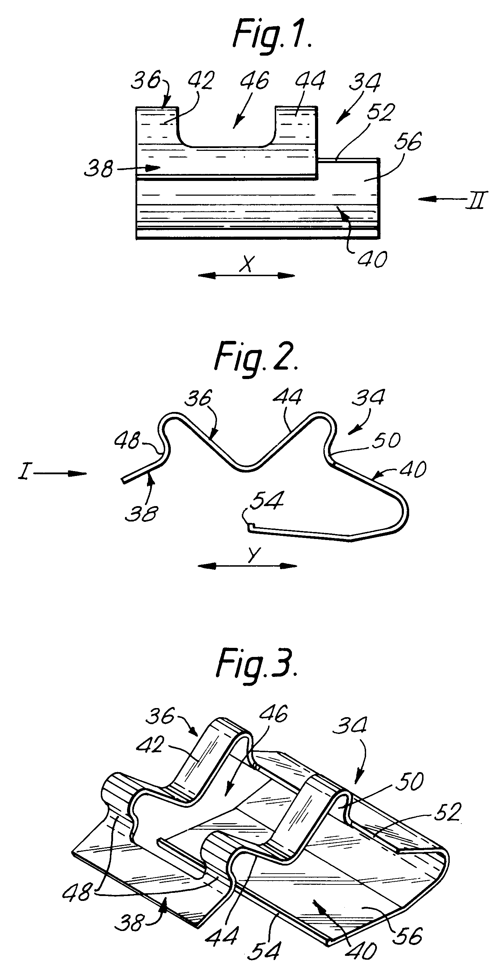

The anti-rattle spring 34 is shown in greater detail in Figures 1 to 3, and is formed (preferably by stamping and bending) in one piece from sheet metal (such as a steel/cadmium alloy, stainless steel, or steel with a suitable coating, such as zinc). The anti-rattle spring 34 comprises a bridge section 36, a first leg 38 and a second leg 40. The bridge section 36 comprises two arms 42,44 which extend substantially parallel to one another in a longitudinal direction Y, and which are spaced apart in the lateral direction X, to define a longitudinally extending slot 46 therebetween. The arms 42,44 are bent into a substantially M shape as can be seen in Figure 2. The first leg 38 is substantially flat and extends in the lateral direction X between one end 48 of the arms 42,44 to close the slot 46 at that end, and extends in substantially the longitudinal direction Y away from the arms 42,44. The second leg 40 also extends in the lateral direction X between the other end 50 of the arms 42,44 to close the other end of the slot 46. The second leg 40 is bent into a substantially U shape as can be seen in Figure 2. One edge 52 of the U is attached to the other end 50 of the arms 42,44 of the bridge section 36. The other (free) edge 54 of the U is directed towards the first leg 38. The second leg also has a first portion 56 extending away from the arms 42,44 a predetermined length in the lateral direction X. Anti-rattle spring 34' is substantially identical to anti-rattle spring 34, except that it is a mirror-image thereof.

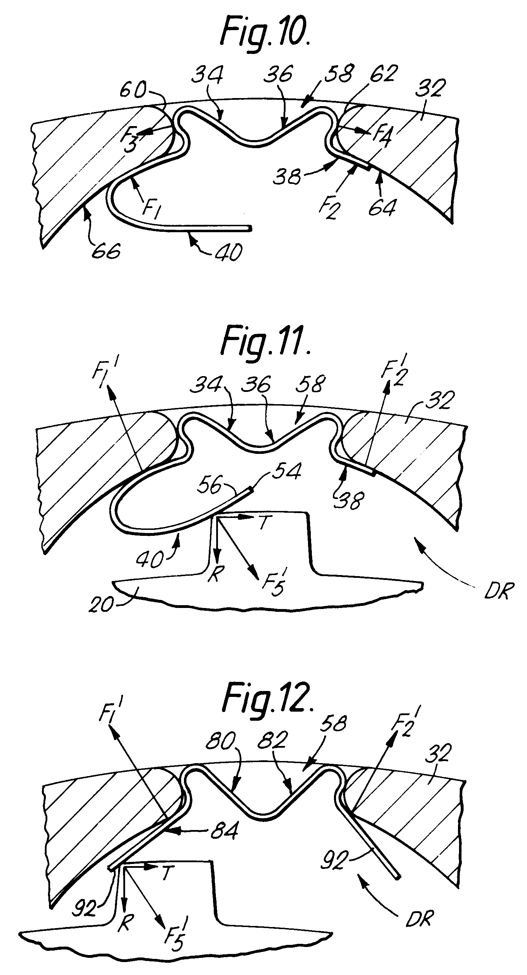

In use (see Figures 10 and 11), the anti-rattle spring 34 is held in the aperture 58 in the bridge portion 32 of the caliper 18 by the resilience of the spring material. In Figure 10, in which the brake pad has been removed, the outer arms of the M of the bridge section 36 of the anti-rattle spring engage the edges 60,62 of the bridge portion 32 which partially define the aperture 58 to generate forces $F_3$ and $F_4$ respectively in the directions indicated. Further, the first leg 38 of the anti-rattle spring 34 engages the inner surface 64 of the bridge portion 32 adjacent edge 62, and the second leg 40 engages the inner surface 66 of the bridge portion adjacent edge 60 to generate forces $F_2$ and $F_1$ respectively in the direction indicated. With this arrangement, the M shape of the bridge section 36 ensures that the anti-rattle spring 34 is securely held in the aperture 58 when the brake pads are removed/replaced. In Figure 11, in which the backing plate 20 of a brake pad 14,16 is in position, the retaining forces are modified. In this latter case, the other (free) edge 54 of the U of the second leg 40 is deflected towards the bridge section 36 by the engagement of the first portion 56 of the second leg with the backing plate 20. The resilience of the material of the anti-rattle spring 34 modifies the previous forces $F_1$ and $F_2$ as indicated by $F_1'$ and $F_2'$, and generates a force $F_5'$ as indicated on the backing plate 20. Force $F_5'$ can be broken down into a radial component R directed towards the rotation axis of the rotor 12, and a tangential component T directed substantially tangentially to the rotor, which ensures the brake pad 14,16 is held in a preferential position. Force $F_5'$ not only helps retain the brake pad 14,16 in position but also substantially removes/reduces any noise or vibration generated in the disc brake 10. Further, the slot 46 allows air to circulate freely through the disc brake 10 to reduce the risk of overheating. The predetermined length of the first portion 56 of the second leg 40 is determined from the total distance travelled by the respective brake pad 14,16 in the lateral direction X during actuation of the disc brake 10, allowing also for wear of the friction lining material 22, to ensure that the first portion always remains in contact with the backing plate 20 whilst the brake pad is in position.

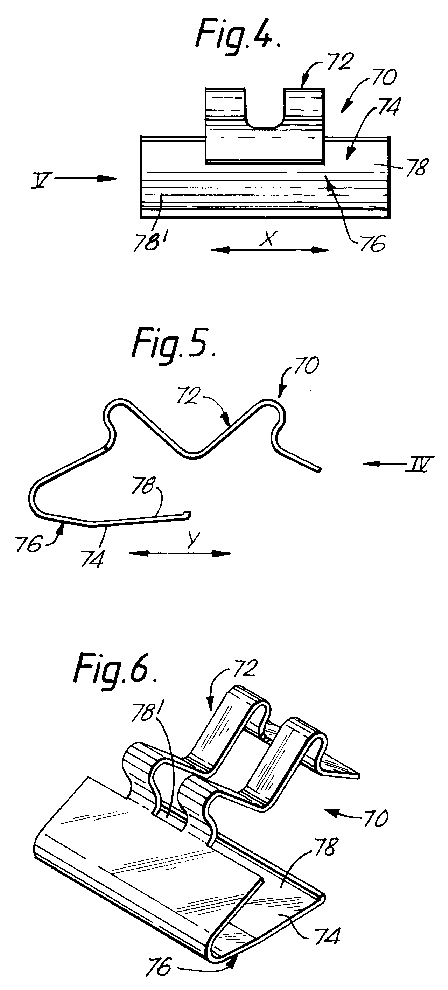

As can be seen from the above description, two anti-rattle springs 34,34' are required for each disc brake 10 which are not identical. Similarly, the anti-rattle spring for the inner brake pad 14 of the disc brake on one side of a motor vehicle would have to be a mirror-image of the anti-rattle spring for the inner brake pad of the disc brake on the other side of the motor vehicle. This potential problem of a separate 'left' and 'right' anti-rattle spring can be overcome with the arrangement shown in Figures 4 to 6. The design and operation of the anti-rattle spring 70 in Figures 4 to 6 is substantially identical to that of the anti-rattle spring 34 shown in Figure 1 to 3. In this case, the length in the lateral direction X of the anti-rattle spring 70 is substantially the same as that of the anti-rattle spring 34. However, the length in the lateral direction X of the bridge section 72 is reduced, and the first portion 74 of the second leg 76 has two sections 78,78' each of which extend a predetermined length in the lateral direction X away from the bridge section 72, but in opposite directions to one another. With this arrangement, identical anti-rattle springs 70 can be used for both brake pads on the same disc brake, and for the disc brakes on opposite sides of a motor vehicle.

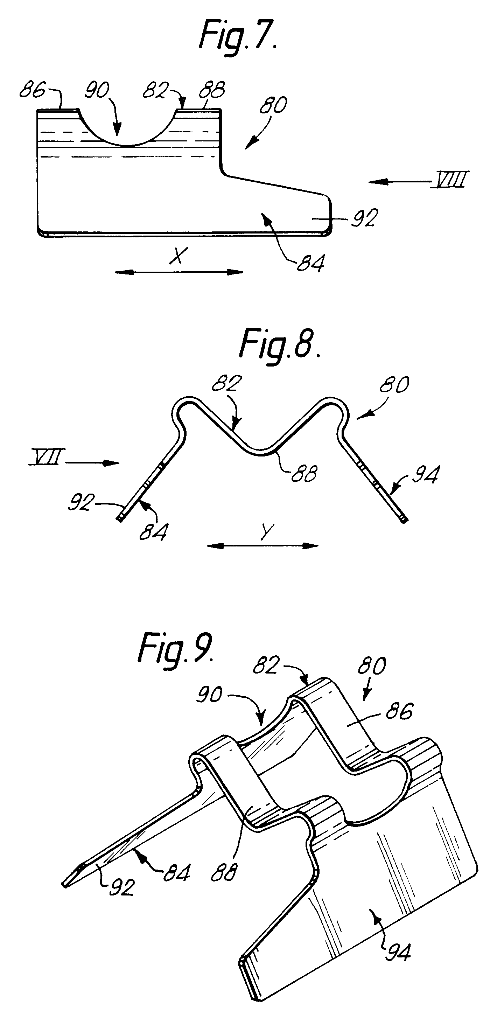

A third embodiment of anti-rattle spring 80 is shown in Figures 7 to 9. In this case, the anti-rattle spring 80 comprises a bridge section 82 which is substantially identical to the bridge section 36 of the anti-rattle spring 34 in Figures 1 to 3. The anti-rattle spring 80, however, has a second leg 84 which is substantially flat and which extends away from the bridge section 82 in substantially the longitudinal direction Y. The second leg 84 also extends between the arms 86,88 of the bridge section 82 to close the slot 90, and also has a first portion 92 which extends away from the bridge section 82 in the lateral direction X for a predetermined length. The anti-rattle spring 80 is held in position in the aperture 58 in the bridge portion 32 of the caliper 18 in substantially the same way as the anti-rattle spring 34 in Figures 1 to 3. The first portion 92 of the second leg 84 also acts on the backing plate 20 of a brake pad 14,16 in substantially the same way, as can be seen from Figure 12. The anti-rattle spring 80 has a first leg 94 which is substantially identical to the second leg 84. With this arrangement, identical anti-rattle springs 80 can be used for both brake pads on the same disc brake, and for the disc brakes on opposite sides of a motor vehicle.

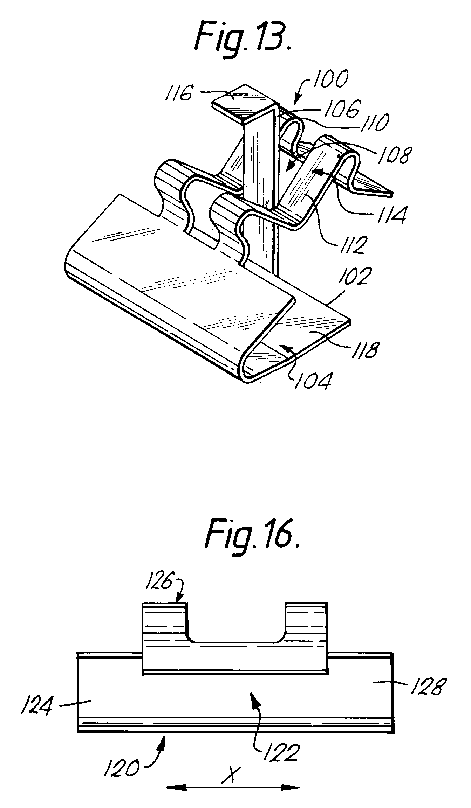

A fourth embodiment of anti-rattle spring 100 in accordance with the present invention is shown in Figure 13. This anti-rattle spring 100 is substantially identical to the anti-rattle spring 70 shown in Figures 4 to 6. In this case, the other, free, edge 102 of the U of the second leg 104 has an extension 106 which is bent to protrude through the slot 108 between the arms 110,112 of the bridge section 114. The extension 106 has a portion 116 at its free end which can be engaged by a suitable tool to allow the first portion 118 of the second leg 104 to be lifted off the backing plate of a brake pad, to thereby allow easier removal and replacement of the brake pad. The anti-rattle spring 34 of Figures 1 to 3, and the anti-rattle spring 120 of Figure 16 (described below) could also be modified to include such an extension.

A fifth embodiment of anti-rattle spring 120 is shown in Figure 16. This embodiment is a modification of the anti-rattle spring 34 shown in Figure 1 to 3, and is basically a longer version of the anti-rattle spring 70 shown in Figures 4 to 6. In this case, the second leg 122 has a second portion 124 which extends in the lateral direction X away from the bridge section 126 in the opposite direction to the first portion 128. With this arrangement, the first portion 128 can engage the backing plate of one brake pad in a disc brake, and the second portion 124 can engage the backing plate of the other brake pad. Consequently, only one anti-rattle spring 120 is required for each disc brake. The length of the second portion 124 may or may not be the same as the length of the first portion 128, dependent on the positioning of the aperture in the bridge portion of the caliper relative to the brake pads.

The anti-rattle springs 34,70,100,120 shown in the drawings may be further modified by having one of the arms of the bridge section longer (in the longitudinal direction Y) than the other arm. Such an arrangement is suitable for use in a disc brake in which the aperture in the bridge portion of the caliper is not symmetrical in shape.

The anti-rattle springs of the present invention can be used with any of the various type of disc brake which are known to those skilled in the art.

## Claims

1. An anti-rattle spring (34) for a disc brake (10) comprising a rotor (12), inner and outer brake pads (14,16) each comprising friction lining material (22) on a backing plate (20), and a caliper (18) comprising inner and outer leg portions (24,26) positioned outwardly of the inner and outer brake pads respectively and an integral bridge portion (32) extending across a portion of the periphery of the rotor, at least one of the leg portions having a piston (28) slidably mounted therein and movable under the action of fluid pressure to move the brake pads in a lateral direction into frictional engagement with the rotor, the anti-rattle spring being formed in one piece from sheet metal and comprising a bridge section (36) resiliently engageable in an aperture (58) in the bridge portion of the caliper, the bridge section comprising two arms (42,44) which extend in a longitudinal direction substantially perpendicular to the lateral direction and substantially parallel to one another, which are spaced apart in the lateral direction to define a longitudinally extending slot (46) therebetween, and which are bent into a substantially M shape; a first leg (38) extending between one end (48) of the arms to close the slot at that end; and a second leg (40) extending between the other end (50) of the arms to close the other end of the slot, the second leg having a first portion (56) extending a predetermined length in the lateral direction for engaging the backing plate of one of the brake pads for exerting a force thereon having both a tangential and a radial component with respect to the disc brake.

2. An anti-rattle spring as claimed in Claim 1, wherein the first portion (74) comprises two sections (78,78') extending in opposite directions to one another, each section having the same predetermined length.

3. An anti-rattle spring as claimed in Claim 1, wherein the first portion (128) extends from one side of the bridge section (126), and wherein the second leg (122) has a second portion (124) extending in the opposite direction to the first portion, whereby the anti-rattle spring can engage the backing plates (20) of both brake pads (14,16) substantially simultaneously.

4. An anti-rattle spring as claimed in any one of Claims 1 to 3, wherein the second leg (40) is bent into a substantially U-shape, one edge (52) of the U being attached to the bridge section (36), and the other, free, edge (54) of the U being directed towards the first leg (38).

5. An anti-rattle spring as claimed in Claim 4, wherein the second leg (104) has an extension (106) bent to protrude between the arms (110,112) and through the slot (108) in the bridge section (114).

6. An anti-rattle spring as claimed in any one of Claims 1 to 3, wherein the second leg (84) is substantially flat and extends away from the bridge section (82).

7. An anti-rattle spring as claimed in any one of Claims 1 to 6, wherein the first leg (38,94) is substantially flat and extends away from the bridge section (36,82).

8. An anti-rattle spring as claimed in any one of Claims 1 to 7, wherein the arms of the bridge section are of unequal length.

9. A disc brake substantially as hereinbefore described comprising an anti-rattle spring as claimed in any one of claims 1 to 8.

# Fig.1.

# Fig.2.

# Fig.3.

*Fig.4.*

72
70
74
78
78'
X
76
V

*Fig.5.*

72
70
78
IV
76
74
Y

*Fig.6.*

72
78'
70
78
74
76

## Fig.7.

## Fig.8.

## Fig.9.

## Fig.10.

## Fig.11.

## Fig.12.

# Fig.13.

# Fig.16.

Fig.14.

Fig.15.

## DOCUMENTS CONSIDERED TO BE RELEVANT

| Category | Citation of document with indication, where appropriate, of relevant passages | Relevant to claim | CLASSIFICATION OF THE APPLICATION (Int. Cl.5 ) |
|---|---|---|---|
| A | GB-A-2 109 491 (NISSHIN KOGYO KK)<br>* the whole document *<br>--- | 1 | F16D65/097 |
| A,D | EP-A-0 294 286 (BENDIX FRANCE SOCIETE ANONYME DITE:)<br>* the whole document *<br>----- | 1 | |

TECHNICAL FIELDS
SEARCHED (Int. Cl.5 )

F16D

The present search report has been drawn up for all claims

| Place of search | Date of completion of the search | Examiner |
|---|---|---|
| THE HAGUE | 11 MAY 1992 | BRAEMS C.G.I. |

CATEGORY OF CITED DOCUMENTS

X : particularly relevant if taken alone
Y : particularly relevant if combined with another
     document of the same category
A : technological background
O : non-written disclosure
P : intermediate document

T : theory or principle underlying the invention
E : earlier patent document, but published on, or
     after the filing date
D : document cited in the application
L : document cited for other reasons
........................................................................................
& : member of the same patent family, corresponding
     document

EPO FORM 1503 03.82 (P0401)